# EUROPÄISCHE PATENTANMELDUNG

(11) **EP 0 908 378 A2**
(43) Veröffentlichungstag der Anmeldung: **14.04.1999**
(21) Anmeldenummer: 98119284.2
(22) Anmeldetag: 07.10.1998
(51) Int. Cl.: B62K 23/08, B62L 3/04

(54) **Fussbremshebel an einem Motorrad mit Trittbrett**

(30) Priorität: 09.10.1997 DE 19744496
(71) Anmelder: Paul, David J., 74736 Hardheim (DE)
(72) Erfinder: Paul, David J., 74736 Hardheim (DE)
(74) Vertreter: Patentanwalts-Partnerschaft Rotermund + Pfusch

(57) **Zusammenfassung**

Für ein Motorrad mit einem Trittbrett (5), das etwa die Länge eines Schuhs oder Stiefels (6) üblicher Größe einer Motorradfahrerin oder eines Motorradfahrers aufweist und das an einer Längsseite des Motorrades in einem der Unterseite des Motorrades zugeordneten Bereich am Motorrad angeordnet ist, und mit einem Fußbremshebel (1), der unterhalb des Trittbrettes (5) zwischen einem in Fahrtrichtung vorderen Trittbrettende und einem in Fahrtrichtung hinteren Trittbrettende am Motorrad schwenkgelagert ist und der ein Pedal (2) aufweist, das zumindest bei unbetätigtem Fußbremshebel (1) oberhalb des Trittbrettes (5) angeordnet ist, soll mit einfachen konstruktiven Maßnahmen die Verkehrssicherheit erhöht werden.

Dies wird erfindungsgemäß dadurch erreicht, daß der Fußbremshebel (1) derart bemessen ist, daß bei unbetätigtem Fußbremshebel (1) das Pedal (2) im wesentlichen vor dem Trittbrett (5) angeordnet ist.

## Beschreibung

Die Erfindung betrifft einen Fußbremshebel an einem Motorrad mit den Merkmalen des Oberbegriffes des Anspruches 1. Die Erfindung betrifft außerdem ein Motorrad mit den Merkmalen des Oberbegriffes des Anspruches 8.

Insbesondere bei einem Motorrad der Marke 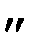 Harley-Davidson", dort beispielsweise bei den Typen 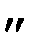 Road King", 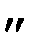 Heritage Springer", 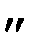 Fat Boy", ist unterhalb des Trittbrettes ein Fußbremshebel gelagert. Als Lagermittel dient dabei z.B. eine an das entsprechende Ende des Fußbremshebels angeschweißte Lagerbuchse. Über diese Lagerbuchse ist der Fußbremshebel auch mit einem Hilfsbremshebel verbunden, der beispielsweise an die Lagerbuchse angeschweißt sein kann und mit einem Bremszylinder oder mit einem Bremskraftverstärker zusammenwirkt. Der Fußbremshebel hat in seiner unbetätigten Ausgangsstellung einen gegenüber dem Trittbrett geneigten Verlauf und erstreckt sich auf der dem Motorrad zugewandten Seite am Trittbrett vorbei. Oberhalb des Trittbrettes weist der Fußbremshebel an seinem anderen Ende ein Pedal auf, mit dem der Fußbremshebel bzw. die Fußbremse betätigt wird. Dieses Pedal weist einen etwa parallel zur Schwenkachse des Fußbremshebels ausgerichteten Verlauf auf, so daß es sich im wesentlichen oberhalb des Trittbrettes und in Fahrtrichtung etwa auf Höhe des vorderen Drittels des Trittbrettes befindet. Es wird darauf hingewiesen, daß im vorliegenden Fall die relativen Ortsangaben 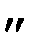 vor" und 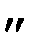 hinter" u.dgl. in bezug auf die Fahrtrichtung des Motorrads zu verstehen sind: 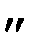 vor dem Pedal" weist demnach auf einen Ort zwischen Pedal und Vorderrad hin, die 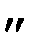 Pedalhinterseite" ist somit die dem Hinterrad zugewandte Pedalseite.

Die bekannte Anordnung des Fußbremshebels gewährleistet, daß bereits nach einem relativ kurzen Verstellweg des Pedals die maximale Bremswirkung erzielbar ist. Auf diese Weise wird eine rasch ansprechende Betätigung der Fußbremse ermöglicht.

Außerdem gewährleistet die herkömmliche Fußbremshebelanordnung auch kleineren, leichteren Fahrern und Fahrerinnen eine wirksame Bremsbetätigung, da der Fußbremshebel im wesentlichen von oben nach unten betätigt wird, so daß der jeweilige Fahrer sein Körpergewicht einsetzen kann, wobei auch leichtere und weniger kräftige Fahrer eine ausreichende Kraft auf das Pedal ohne weiteres aufbringen können.

Jedoch hat die Verwendung des bekannten Fußbremshebels zur Folge, daß bei unbetätigtem Fußbremshebel das Pedal mit relativ geringem Vertikal-Abstand zum Trittbrett angeordnet ist. Aufgrund des insoweit eingeschränkten Raumes zwischen dem Pedal und dem Trittbrett, kann der Bereich des Trittbrettes, der unterhalb des Pedals liegt und der sich vor dem Pedal befindet, nur noch mit flachen Schuhen verwendet werden. Der Schuh kann dann jedoch zwischen Pedal und Trittbrett eingeklemmt werden, wodurch ein rasches Bremsen erschwert und die Fahrsicherheit reduziert wird.

Motorradschuhe - insbesondere Motorradstiefel - in einer für Motorradfahrer und -fahrerinnen üblichen Größe und Höhe lassen sich regelmäßig nicht vollständig auf dem Trittbrett aufsetzen, da sie am Pedal anstoßen. Zwar kann das Trittbrett noch dazu verwendet werden, den Schuh entweder nur mit der Ferse hinter dem Pedal aufzusetzen, wobei dann die Fußspitze nach außen abgewinkelt ist, oder nur mit dem Zehenbereich hinter dem Pedal oder nur mit der Ferse vor dem Pedal aufzusetzen. Jedoch hat jede dieser Aufsetzmöglichkeiten für den Fahrer eine unbequeme Sitzposition zur Folge und führt insbesondere bei längeren Fahrten zu Ermüdungserscheinungen. Außerdem hat diese Sitzposition zur Folge, daß der Fahrer zum Bremsen zunächst sein ganzes Bein anheben muß, wobei dann die Betätigung des Pedals mit dem ganzen - insbesondere ermüdeten - Bein erfolgt, so daß eine Dosierung der Bremsung, wenn überhaupt, nur relativ grob erfolgen kann. Dies kann insbesondere bei riskanten Situationen zu unangemessenen Reaktionen führen und die Gefahren für die Verkehrsteilnehmer erhöhen.

Die US 2,638,175 zeigt ein Motorrad mit einem Trittbrett, das sich im wesentlichen entlang der gesamten Länge des Motorrades erstreckt. Oberhalb des Trittbrettes sind ein Hilfsbremshebel sowie ein kombinierter Starter-Bremshebel angeordnet.

Aus der DE 35 08 511 A1 ist ein Moped mit einem Durchstieg bekannt, das in der Mitte des Durchstieges ein Trittbrett aufweist. Seitlich des Trittbrettes ist ein Bremshebel angeordnet, dessen Pedal bei unbetätigter Fußbremse oberhalb des Trittbrettes und vor dem Trittbrett angeordnet ist.

Die vorliegende Erfindung beschäftigt sich mit dem Problem, einen Fußbremshebel sowie ein Motorrad der eingangs genannten Art mit einfachen konstruktiven Maßnahmen derart auszugestalten, daß sich die Verkehrssicherheit des Motorrades erhöht, wobei eine wirksame Betätigung der Fußbremse gewährleistet werden soll.

Dieses Problem wird erfindungsgemäß durch einen Fußbremshebel mit den Merkmalen des Anspruches 1 sowie durch ein Motorrad mit den Merkmalen des Anspruches 8 gelöst.

Die Erfindung beruht auf dem allgemeinen Gedanken, zur Erhöhung der Verkehrssicherheit dem Fahrer eine bequeme Fuß- bzw. Schuhstellung und Beinhaltung zu ermöglichen, wobei ein bequemes Abstellen des Schuhes bzw. Stiefels dadurch bewirkt wird, daß der im Bereich des Trittbrettes zum Anordnen eines Schuhes zur Verfügung stehende Raum vergrößert wird. Zu diesem Zweck wird der Fußbremshebel so ausgestaltet, daß das Pedal im Bereich des in Fahrtrichtung vorderen Endes des Trittbrettes zu liegen kommt, so daß die sich nach hinten an das Pedal anschließende Abstellfläche des Trittbrettes vollständig zum bequemen Abstellen eines Stiefels in einer üblichen Größe zur Verfügung steht. Durch die erfindungsgemäße Maßnahme wird ausreichend Abstellraum bzw. Abstellfläche für den Stiefel auf dem Trittbrett gewonnen, ohne daß dabei das Trittbrett selbst oder seine Anordnung am Motorrad verändert werden muß. Obwohl sich durch diesen Vorschlag der Hebelarm und somit auch der Verstellweg des Fußbremshebels vergrößert haben, hat sich durch die erfindungsgemäße Veränderung des Fußbremshebels die Betätigbarkeit der Fußbremse nicht verschlechtert, sondern verbessert. Im Unterschied zum bekannten Fußbremshebel muß der erfindungsgemäße Fußbremshebel nicht mit dem im Ganzen angehobenen Bein betätigt werden. Aufgrund der gewählten Anordnung ist es während der Betätigung des Fußbremshebels bzw. des Pedals möglich, den Fuß bzw. den Schuh oder Stiefel mit der Ferse auf dem Trittbrett aufgestellt zu lassen und das Pedal nur durch eine Bewegung des Fußes niederzudrücken. Auf diese Weise ist der Fuß in einer Ausgangslage zunächst etwa rechtwinklig zum Unterschenkel, so daß die volle Leistung der Fuß-Streck-Muskulatur zur Verfügung steht. Die Bremsbetätigung kann dann orthopädisch und ergonomisch günstig ausgeführt werden.

Die Fußbremse ist auch erheblich besser und feiner dosierbar. Dies wird einerseits durch den verlängerten Hebelarm erreicht, der die auf das Pedal aufgebrachten Kräfte stärker übersetzt. Andererseits wird die feinere Dosierung der Bremse durch den verlängerten Verstellweg des Pedals erzielt. Außerdem bewirkt der erfindungsgemäße Fußbremshebel, daß nicht nur übliche Schuhe sondern auch größere, insbesondere höhere Motorradschuhe und -stiefel bequem auf dem Trittbrett abgestellt werden können, wobei auch bei längeren Fahrten keine Ermüdungserscheinungen im Fuß bzw. im Bein des Fahrers auftreten, mit der Folge, daß der Fahrer mit einem ausgeruhten Fuß in einer Gefahrensituation mit einer angemessenen Bremskraft reagieren kann. Auf diese Weise wird die Fahrsicherheit wesentlich erhöht.

Entsprechend einer vorteilhaften Weiterbildung des erfindungsgemäßen Fußbremshebels kann dieser derart bemessen sein, daß der Abstand zwischen einer Schwenkachse, um die der Fußbremshebel schwenkbar am Motorrad gelagert ist, und dem in Fahrtrichtung hinteren Pedalende größer ist als der Abstand zwischen der Schwenkachse und dem in Fahrtrichtung vorderen Trittbrettende. Diese Maßnahme ermöglicht die Ausbildung eines relativ langen Verstellweges für das Pedal. Auf diese Weise wird die Dosierbarkeit der Bremse verbessert.

Bei bevorzugten Ausführungsformen des erfindungsgemäßen Fußbremshebels kann das Pedal flächig ausgebildet und derart am Fußbremshebel angeordnet sein, daß bei unbetätigtem Fußbremshebel zwischen einer Pedalebene und einer Trittbrettebene ein Winkel α ausgebildet ist, wobei dieser Winkel α vorzugsweise derart gewählt ist, daß nach einer Schwenkbewegung des Fußbremshebels um den Winkel α eine Pedaloberseite und eine Trittbrettoberseite etwa in einer Ebene liegen. Durch diese Merkmale kann die Krafteinleitung für die Bremsbetätigung in ergonomischer Hinsicht optimiert werden. Insbesondere, wenn der Winkel α einen Wert von 25° ± 10° oder 25° ± 5° oder etwa 22° ± 1° annimmt, ergeben sich zwischen Pedalfläche und Trittbrettfläche Winkelverhältnisse, die sowohl für einen Fahrer mit kleinen Schuhen als auch für einen Fahrer mit großen Schuhen eine Betätigungsstellung für den Schuh ermöglichen, bei der die Bremse mit einem optimalen Bremsdruck betätigbar ist.

Weitere wichtige Merkmale und Vorteile ergeben sich aus den Unteransprüchen und aus der nachfolgenden Beschreibung eines Ausführungsbeispieles anhand der Zeichnungen. Es zeigen, jeweils schematisch,
- Fig. 1: eine Seitenansicht auf den Bereich eines Motorrades, in dem sich ein Trittbrett und ein Fußbremshebel nach dem Stand der Technik befinden, und
- Fig. 2: eine Seitenansicht wie in Fig. 1, jedoch bei einem erfindungsgemäßen Motorrad mit einem Fußbremshebel gemäß der Erfindung.

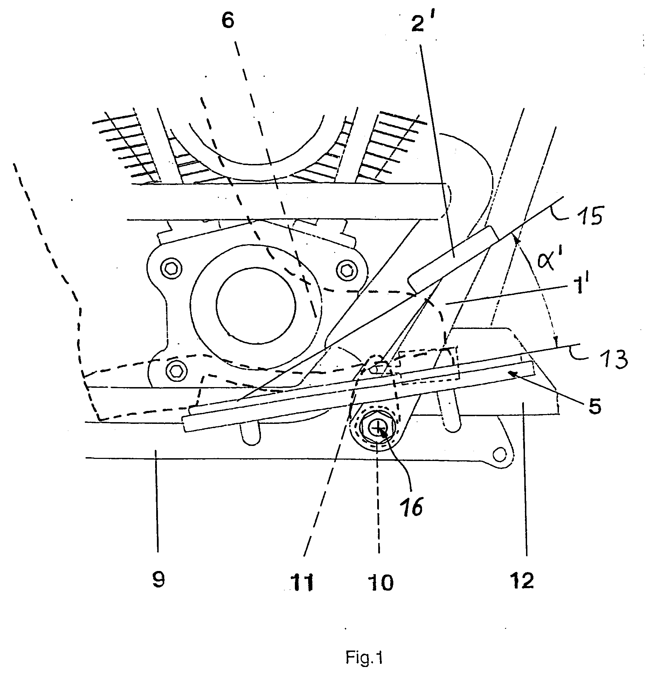

Entsprechend Fig. 1 ist auf einer Seite eines herkömmlichen Motorrades, üblicherweise auf der in Fahrtrichtung rechten Seite, ein Fußbremshebel 1' gemäß dem Stand der Technik angeordnet, mit dem die Fußbremse, das ist üblicherweise die Bremse des Hinterrades des Motorrads` betätigt wird. Der bekannte Fußbremshebel 1' ist an seinem entsprechend Fig. 1 unteren Ende unterhalb eines Trittbrettes 5 an einem Rahmen 9 des im übrigen nicht dargestellten Motorrades um eine Schwenkachse 16 schwenkbar gelagert. Aus Fig. 1 ergibt sich daher, daß das Trittbrett 5 in herkömmlicher Weise an einer Längsseite eines Motorrades ohne Durchstieg in einem der Unterseite des Motorrades bzw. der Fahrbahn zugeordneten Bereich am Motorrad angeordnet ist. Die Schwenkachse 16 des Fußbremshebels 1' verläuft dabei quer zur Fahrzeuglängsrichtung. Zu diesem Zweck ist am Fußbremshebel 1' an dem am Rahmen 9 gelagerten Ende eine Lagerbuchse 10 insbesondere durch Anschweißen befestigt, die auf einen entsprechenden Bolzen am Rahmen 9 aufgesteckt ist. Über die Lagerbuchse 10 ist der Fußbremshebel 1' mit einem kleineren Hebel 11 verbunden, der im folgenden als Hilfsbremshebel 11 bezeichnet wird. Dieser Hilfsbremshebel 11 wirkt mit einem Bremszylinder oder einem Bremskraftverstärker 12 zusammen.

Ausgehend von seiner Lagerung am Rahmen 9 verläuft der Fußbremshebel 1' seitlich zwischen dem Trittbrett 5 und dem übrigen Motorrad, in Fahrtrichtung nach vorn und nach oben geneigt. An dem seiner Lagerung gegenüberliegenden Ende weist der Fußbremshebel 1' ein Pedal 2' auf, das sich parallel zur Schwenkachse 16 des Fußbremshebels 1' erstreckt und das Trittbrett 5 etwa auf Höhe dessen vorderen Drittels quer zu dessen Längserstreckung überdeckt. Auf diese Weise kann das Pedal 2' sowohl von einem Fahrer mit großen Schuhen als auch von einem Fahrer, insbesondere einer Fahrerin, mit kleinen Schuhen betätigt werden, und zwar indem mit dem Schuh eine im wesentlichen von oben nach unten einwirkende Kraft auf das Pedal 2' aufgebracht wird.

Bei dieser bekannten Anordnung ist es für einen üblicherweise verwendeten Schuh 6, insbesondere für Motorradstiefel, nicht möglich, den Schuh bzw. den Stiefel 6 auf bequeme Weise auf dem Trittbrett 5 abzustellen, da der Raum zwischen dem Pedal 2' und dem Trittbrett 5 zu klein ist, um mit einem solchen Schuh bzw. Stiefel 6 auch die vordere Trittfläche des Trittbrettes 5 auszunutzen. So ist der Fahrer gezwungen, seinen Stiefel 6 nur im vorderen Bereich der Sohle auf dem hinteren Bereich des Trittbrettes 5 abzustellen, oder - noch unbequemer - den Stiefel 6 mit der Verse auf den hinteren Bereich des Trittbrettes 5 abzustellen und den vorderen Bereich des Schuhes 6 nach außen abgewinkelt, am Pedal 2' vorbei zu halten.

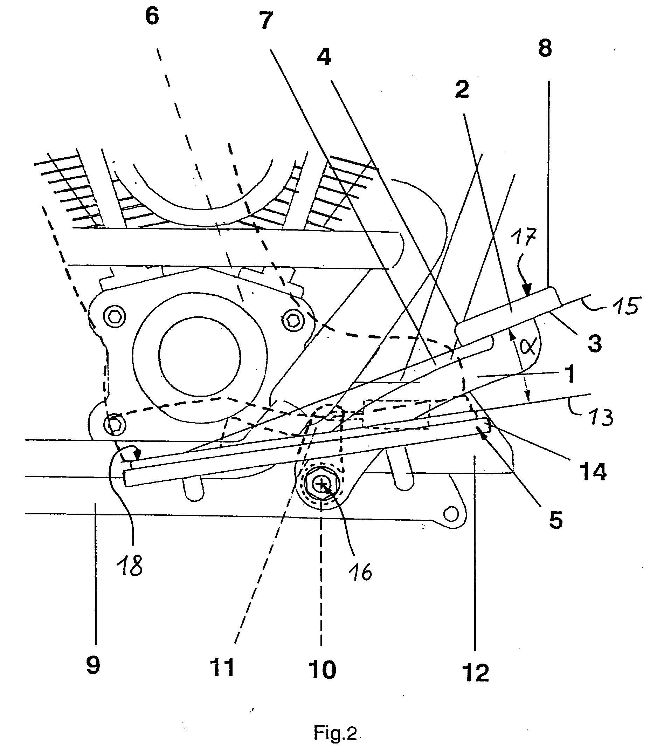

Im Unterschied dazu ist es entsprechend Fig. 2 bei der erfindungsgemäßen Anordnung des Fußbremshebels 1 möglich, die ganze Trittfläche des Trittbrettes 5 zum vollständigen und ungezwungenen Aufsetzen des Stiefels 6 auszunutzen. Dies wird dadurch ermöglicht, daß der Fußbremshebel 1 erfindungsgemäß so bemessen ist, daß das Pedal 2 im Bereich einer in Fahrzeugrichtung vorderen Kante 14 des Trittbrettes 5 angeordnet ist, bzw. im Bereich einer Schuhspitze 7 des bequem auf dem Trittbrett 5 abgestellten Stiefels 6 angeordnet ist. Bevorzugt wird eine Positionierung des Pedals 2, bei der bei unbetätigtem Fußbremshebel 1 ein vorderes Ende 3 des Pedals 2 vor der vorderen Kante 14 des Trittbrettes 5 liegt und sich ein hinteres Ende 4 des Pedals 2 hinter oder auf der Höhe der Vorderkante 14 des Trittbrettes 5 befindet. Bei einer derartigen Anordnung des Pedals 2 bzw. im Zusammenhang mit der entsprechenden Abmessung des Fußbremshebels 1 ist es möglich, während des Bremsvorganges, den Schuh 6 mit der Ferse auf dem Trittbrett 5 abzusetzen und mit dem vorderen Bereich der Schuhsohle das Pedal 2 zu betätigen. Auf diese Weise ist eine erheblich verbesserte Dosierung der Bremse möglich. Die zur Betätigung des Pedals 2 erforderliche Kraft kann dabei ohne weiteres auch von weniger kräftigeren Fahrern aufgebracht werden, da eine in orthopädischer und ergonomischer Sicht günstige Bewegung vom Fuß durchgeführt werden kann.

Im Unterschied zum bekannten Fußbremshebel 1' aus Fig. 1 ist der Hebelarm des erfindungsgemäßen Fußbremshebels 1 aus Fig. 2 länger und bewirkt dadurch eine verbesserte Kraftübersetzung auf den Hilfsbremshebel 11, so daß eine verbesserte Dosierbarkeit erzielt werden kann.

Das Abstellen des Stiefels 6 auf dem Trittbrett 5 in der in Fig. 2 dargestellten Weise bewirkt darüber hinaus, daß auch bei längeren Fahrten der Fuß bzw. das Bein des Fahrers eine bequeme Haltung einnimmt, wodurch einem Ermüden des Fußes und somit auch des Fahrers entgegengewirkt wird.

Die erfindungsgemäße Ausgestaltung und Anordnung des Fußbremshebels 1 ermöglicht einerseits ein bequemes Abstellen des Stiefels 6 auf dem Trittbrett 5, ohne daß an dem Trittbrett 5 oder am Motorrad - außer dem Fußbremshebel 1 - eine bauliche Veränderung vorgenommen werden muß. Andererseits bewirkt der erfindungsgemäße Fußbremshebel 1 eine Verbesserung der Bremskrafteinleitung und der Betätigung des Bremspedals 2. Insgesamt wird somit auf konstruktiv einfache Weise die Fahrsicherheit des Motorrades auf effiziente Art erhöht.

Das Pedal 2 ist flächig ausgebildet, wobei eine durch das Pedal 2 bzw. entlang seiner Betätigungsfläche verlaufende Ebene 15 mit einer durch das Trittbrett 5 bzw. entlang seiner Aufstellfläche verlaufenden Ebene 13 einen Winkel α einschließt. Dieser Winkel α ist bei einer bevorzugten Ausführungsform dahingehend optimiert, daß sich sowohl für kleine als auch für große Schuhe bzw. Stiefel 6 eine im Ansprechpunkt der Bremse optimierte Druckkraft auf das Pedal 2 übertragen läßt. Dieser Winkel α wird aus einem Bereich zwischen 15° und 35° vorzugsweise aus einem Bereich zwischen 20° und 30° ausgewählt. Derzeit wird jedoch ein Winkel von 22° ± 1° als optimal angesehen. Der Winkel α ist beim erfindungsgemäßen Bremshebel 1 gemäß Fig. 2 im gezeigten Beispiel deutlich kleiner als der entsprechende Winkel α beim bekannten Bremshebel 1' gemäß Fig. 1.

Entsprechend einer bevorzugten Ausführungsform ist der Winkel α so gewählt, daß eine Schwenkverstellung des Fußbremshebels 1 um diesen Winkel α - sofern der maximale Betätigungsweg des Fußbremshebels 1 eine derartig große Verstellung zuläßt - eine Pedaloberseite 17 etwa eben zu einer Trittbrettoberseite 18 ausrichtet. Die Länge des Fußbremshebels 1 ist dabei entsprechend gewählt, das heißt, der Abstand zwischen der Schwenkachse 16 und dem hinteren Ende 4 des Pedals 2 ist größer als der Abstand zwischen der Schwenkachse 16 und der vorderen Kante 14 des Trittbrettes 5.

Um die Sicherheit bei der Betätigung der Fußbremse zu erhöhen ist das Pedal 2, zumindest aber seine Trittfläche 8 mit einem rutschfesten Aufsatz versehen, der beispielsweise aus einem profilierten Kunststoff, insbesondere aus Gummi, bestehen kann.

## Patentansprüche

1. Fußbremshebel an einem Motorrad, das ein Trittbrett (5) aufweist, welches etwa die Länge eines Schuhs oder Stiefels (6) üblicher Größe einer Motorradfahrerin oder eines Motorradfahrers aufweist und welches an einer Längsseite des Motorrades in einem der Unterseite des Motorrades zugeordneten Bereich am Motorrad angeordnet ist, wobei der Fußbremshebel (1) unterhalb des Trittbrettes (5) zwischen einem in Fahrtrichtung vorderen Trittbrettende und einem in Fahrtrichtung hinteren Trittbrettende am Motorrad schwenkgelagert ist und ein Pedal (2) aufweist, das zumindest bei unbetätigtem Fußbremshebel (1) oberhalb des Trittbrettes (5) angeordnet ist,
**dadurch gekennzeichnet,**
daß der Fußbremshebel (1) derart bemessen ist, daß bei unbetätigtem Fußbremshebel (1) das Pedal (2) im wesentlichen vor dem Trittbrett (5) angeordnet ist.

2. Fußbremshebel nach Anspruch 1,
**dadurch gekennzeichnet,**
daß der Fußbremshebel (1) derart bemessen ist, daß bei unbetätigtem Fußbremshebel (1) sich ein in Fahrtrichtung vorderes Pedalende (3) vor dem vorderen Trittbrettende (14) befindet und daß sich ein in Fahrtrichtung hinteres Pedalende (4) hinter dem vorderen Trittbrettende (14) befindet.

3. Fußbremshebel nach Anspruch 1,
**dadurch gekennzeichnet,**
daß der Fußbremshebel (1) derart bemessen ist, daß bei unbetätigtem Fußbremshebel (1) sich ein in Fahrtrichtung vorderes Pedalende (3) und ein in Fahrtrichtung hinteres Pedalende (4) vor dem vorderen Trittbrettende (14) befinden.

4. Fußbremshebel nach einem der vorhergehenden Ansprüche,
**dadurch gekennzeichnet,**
daß der Fußbremshebel (1) derart bemessen ist, daß der Abstand zwischen einer Schwenkachse (16), um die der Fußbremshebel (1) schwenkbar am Motorrad gelagert ist, und dem in Fahrtrichtung hinteren Pedalende (4) größer ist als der Abstand zwischen der Schwenkachse (16) und dem in Fahrtrichtung vorderen Trittbrettende (14).

5. Fußbremshebel nach einem der vorhergehenden Ansprüche,
**dadurch gekennzeichnet,**
daß das Pedal (2) flächig ausgebildet und derart am Fußbremshebel (1) angeordnet ist, daß bei unbetätigtem Fußbremshebel (1) zwischen einer Pedalebene (15) und einer Trittbrettebene (13) ein Winkel (α) ausgebildet ist.

6. Fußbremshebel nach Anspruch 5,
**dadurch gekennzeichnet,**
daß der Winkel (α) derart gewählt ist, daß nach einer Schwenkbewegung des Fußbremshebels (1) um den Winkel (α) eine Pedaloberseite (17) und eine Trittbrettoberseite (18) etwa in einer Ebene liegen.

7. Fußbremshebel nach Anspruch 5 oder 6,
**dadurch gekennzeichnet,**
daß der Winkel (α) 25° ± 10° oder 25° ± 5° oder etwa 22° ± 1° beträgt.

8. Motorrad mit einem Trittbrett (5), das etwa die Länge eines Schuhs oder Stiefels (6) üblicher Größe einer Motorradfahrerin oder eines Motorradfahrers aufweist und das an einer Längsseite des Motorrades in einem der Unterseite des Motorrades zugeordneten Bereich am Motorrad angeordnet ist, und mit einem Fußbremshebel (1), der unterhalb des Trittbrettes (5) zwischen einem in Fahrtrichtung vorderen Trittbrettende und einem in Fahrtrichtung hinteren Trittbrettende am Motorrad schwenkgelagert ist und der ein Pedal (2) aufweist, das zumindest bei unbetätigtem Fußbremshebel (1) oberhalb des Trittbrettes (5) angeordnet ist,
**dadurch gekennzeichnet,**
daß der Fußbremshebel (1) derart bemessen ist, daß bei unbetätigtem Fußbremshebel (1) das Pedal (2) im wesentlichen vor dem Trittbrett (5) angeordnet ist.
